# EUROPEAN PATENT SPECIFICATION

(11) **EP 3 375 654 B1**
(45) Date of publication and mention of the grant of the patent: **20.04.2022**
(21) Application number: 15908224.7
(22) Date of filing: 11.11.2015
(51) Int. Cl.: B60K 35/00, G01P 15/08, G01D 7/08, G12B 11/00, G07C 5/08, B60K 37/02

(54) **DEVICE FOR DISPLAYING MARKINGS**
VORRICHTUNG ZUR ANZEIGE VON MARKIERUNGEN
DISPOSITIF DE VISUALISATION DE REPÈRES

(43) Date of publication of application: 19.09.2018
(73) Proprietor: Manso Aguado, Manuel Alejandro, 28051 Madrid (ES)
(72) Inventor: Manso Aguado, Manuel Alejandro, 28051 Madrid (ES)
(74) Representative: Elzaburu S.L.P.
(86) International application number: PCT/ES2015/070810
(87) International publication number: WO 2017/081334

(56) References cited:
- WO-A1-2009/021806
- CA-A- 1 057 979
- DE-A1- 3 613 201
- DE-A1- 10 249 765
- DE-A1-102005 015 178
- DE-A1-102009 058 870
- GB-A- 2 517 472
- GB-A- 2 517 472
- US-A- 2 798 454
- US-A- 4 841 902
- US-A1- 2008 163 811
- US-A1- 2011 260 850

## Description

### Object

The present invention relates to a marker display device of an electromechanical device.

### Prior art

Known in the prior art is a device, which acts as a tachometer and rev counter, comprising an indicator whereby indications corresponding to two physical magnitudes related to each other in a motor vehicle are possible; that is to say, on a graduated part, the single device indicator provides simultaneous information on the instantaneous speed of the motor vehicle and of the operation regime of the engine for the instantaneous speed of the vehicle at that time.

However, the aforementioned device is unable to indicate the existence of an incorrect correlation between the two parameters of the motor vehicle when vehicle operation is different from the normal operation expected.

Document DE102005015178 describes a display has a pointer is rotatable around an axis of rotation and represents a physical value by the rotation in interaction with a scale. The pointer or pointer background proportionally displays another physical value. The pointer exhibits a beam whose length corresponds to the latter physical value to be displayed. The width of the pointer is changeable corresponding to the latter physical value.

Document WO 2009021806 describes a motor vehicle display with a first indicator and a first dial in which an average fuel consumption is indicated on the first dial by means of the first indicator, it is provided that there is a second dial and that the first indicator in conjunction with the second dial indicates a distance which can still be covered with the amount in the vehicle tank, wherein the second dial is followed automatically.

Document GB2517472 describes a display for indicating an amount consists of a scale and an indicator such as a needle movable with respect to the scale. Different scales are provided for different purposes and are changeable without altering the instant position of the indicator. The display may indicate the state of charge of a battery of a hybrid electric vehicle having an internal combustion engine and motor/generator, different scales having maxima corresponding to different nominal or optimum states of charge. The invention can be helpful in avoiding fully charging the battery too frequently. The main scale may be focussed on a 25% minimum to 75% maximum, whilst a range extension is available for higher charges. This may be revealed via a shutter or by projection.

### Summary

The present invention aims to solve one or more of the drawbacks set forth above by means of a marker display device as defined in the claims.

The display device of markers associated to physical magnitudes linked to each other, and relating to the operation of a plurality of electromechanical devices, wherein electrical and mechanical parts cooperate to form an assembly; wherein the display device comprises a controller device, in electrical communication with at least a first measuring device, a second measuring device and a third referencing device adapted to provide a reference value relative to the relationship between the physical magnitudes, to continuously register the values of a first physical magnitude and a second physical magnitude, originating in the first and second measuring device respectively, and of the third referencing device adapted to provide a reference value relative to the relationship between the magnitudes; the controller device being in electrical communication with a first indicator, a second indicator, such that the controller device generates and transmits to the first and second indicator the corresponding positioning signals in order that the first and second indicator, respectively, indicate the corresponding markers belonging to the first graduated scale and the second graduated scale; and with the scales and markers in order that they take their appropriate size and position and the markers to be positioned correctly in accordance with the data supplied by the referencing device adapted to provide a reference value relative to the relationship between the magnitudes.

During the normal or expected operation of the devices of the assembly, the first and second indicator will be aligned indicating markers, likewise aligned, and during operation other than the normal or expected operation, the first and second indicator will be misaligned indicating markers, likewise misaligned.

The controller device is further electrically connectable to a third indicator adapted to audio-visually display, in real-time, the reference value.

The marker display device of an electromechanical device such as a motor vehicle includes at least a first graduated scale and a second graduated scale both divided in markers respectively associated to a first physical magnitude and a second physical magnitude, being independently measurable.

The markers represent a succession of units between a minimum and maximum value of the physical magnitudes related to each other by a known mathematical relationship. As a result, the display device comprises graduated scales of various measurable physical magnitudes.

The physical magnitudes represent the instantaneous operation of elements or parts of the electromechanical device.

The display device comprises a first indicator adapted to indicate a marker belonging to the first graduated scale and a second indicator also adapted to indicate a marker also belonging to the second graduated scale; both the first and second graduated scales being shown on a display screen so that both the first and second indicator can be displayed superimposed on the same display screen during the normal operation of the elements of the electromechanical device. That is to say, the two indicators indicate markers that are aligned during normal operation of the electromechanical device.

It should be noted that there is one indicator per graduated scale, which positions itself on a marker of the corresponding graduated scale to indicate the value of the physical magnitude relative to the current operation of the element of the electromechanical device.

If the operation of at least one element of the electromechanical device is other than the normal or expected operation, the first indicator and the second indicator will no longer be displayed superimposed on the display screen, each indicator indicating a marker on the respective graduated scale. That is to say, the markers currently indicated by each indicator are not aligned when the operation of any element of the electromechanical device is other than the normal operation thereof.

Accordingly, both first and second indicator are displayed misaligned on the display screen also indicating likewise misaligned markers on the scales currently displayed on the display screen.

The display device further comprises a controller device in electrical communication with the first and second measuring device to continuously register the values of the first and second physical magnitudes originated in the first and second measuring device and with the third referencing device being adapted to provide a reference value between the magnitudes.

The controller device is in electrical communication with the first and second indicators to generate and transmit corresponding positioning signals to the first and second indicator, respectively, so that both first and second indicator indicate a marker belonging to the first graduated scale and a marker also belonging to the second graduated scale respectively.

The controller device is in electrical communication with the graduated scales and the markers in order for them to take their appropriate size and position for each moment in real time.

The first and second indicator position themselves, in real time, on the respective markers of the display screen.

Each marker represents the value of a physical magnitude on the corresponding graduated scale.

The first physical magnitude corresponds to the output signal of a first measuring device adapted for measuring the first physical magnitude of the first element of the electromechanical device; for example, the first measuring device is configured to measure the instantaneous speed of the vehicle; and the second physical magnitude corresponds to the output signal of a second measuring device adapted for measuring the second physical magnitude of the second element part of the electromechanical device such as, for example, the revolutions per minute of the engine in the same vehicle.

During normal operation, the first graduated scale and a second graduated scale are represented on the display screen based on the mathematical relationship associated with the operation, according to the reference value provided by the referencing device in real time of the vehicle, such that the first and second indicator are displayed indicating, if operation is normal, two markers, each of the markers respectively linked to a graduated scale. For this example, the reference value of the mathematical relationship corresponds to the gear or gear relationship geared in the gearbox.

With each mathematical relationship change between the first and second measurable physical magnitude, the reference value provided by the referencing device varies, and at least one of the graduated scales varies its size and, if necessary, its position with respect to the other graduated scale based on the existing mathematical relationship. As a result, the markers of the variable graduated scale also move in accordance and coinciding with their new relationship with the other scale.

With each change of reference mathematical relationship, the third indicator is capable of displaying, in real time, information related to the relative reference value between the magnitudes.

The first and/or second indicator will adapt their indicating position to the new representation of the graduated scales displayed on the display screen, to indicate the markers corresponding to the current operation of the electromechanical device; there may be two situations, one of them is that the first and second indicators remain superimposed or aligned, to indicate aligned markers, which corresponds to a normal or expected operation; and the second possible situation is that the first and second indicators are displayed misaligned or not superimposed to indicate misaligned markers corresponding to operation other than the normal or expected operation of the electromechanical device. Therefore, the first and second indicator are positioned on different markers without being aligned on the graduated scales displayed by the display device.

The indicators cease to be displayed aligned when the mathematical relationship between the measurable physical magnitudes is different from the relationship relative to normal operation, according to the reference value supplied by the referencing device at the present moment.

The first and/or second graduated scale are displayed on the display screen with a certain degree of enlargement or reduction and/or offset based on the existing relationship, in accordance with the value supplied by the referencing device; at a given time, in real-time; between the first and second magnitude.

As a result, the display device is adapted to notify the user of the electromechanical device that the latter's operation is different from the normal or expected operation, when the first indicator and the second indicator are not superimposed and are positioned on likewise misaligned display markers; thus, the display device notifies the existence of the abnormal operation of at least one element.

The display device enables the user to detect abnormal or unexpected operation, or that is different from what is usual or normal, without that user needing technical knowledge to recognise a type of operation which is different from the normal or expected operation.

### Brief description of the figures

A more detailed explanation of the invention is given in the description which follows and which is based on the accompanying figures:
- Figure 1 shows in a diagram the display screen of the marker display device, which are associated to physical magnitudes linked to each other, and relating to the operation of a plurality of devices cooperating as a charger or consumer assembly for a power source 100% charged/discharged, during a normal operation of the elements of the device assembly;
- Figure 2 shows in a diagram the display screen of a marker display device, during an operation other than the normal or expected operation of the elements of the device assembly, 60% charged/discharged.
- Figure 3 shows in a diagram the display screen of the marker display device during normal operation of a plurality of devices, that cooperate, such as a motor vehicle, when the first gear of that vehicle is engaged;
- Figure 4 shows in a diagram the display screen of the marker display device, during an operation other than the normal or expected operation of the motor vehicle when the first gear of that vehicle is engaged;
- Figure 5 shows in a diagram the display screen of the marker display device during normal operation of a plurality of devices, that cooperate, such as a motor vehicle, when the fifth gear of that vehicle is engaged; and
- Figure 6 shows in a diagram the display screen of the marker display device during an operation other than the normal or expected operation of a motor vehicle when the fifth gear of that vehicle is engaged;

### Description

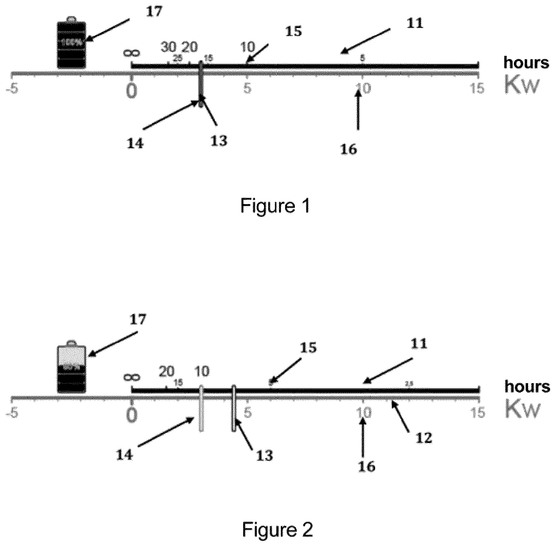

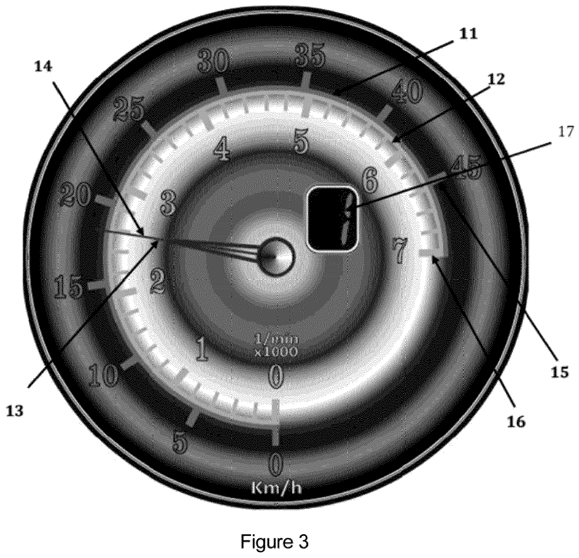

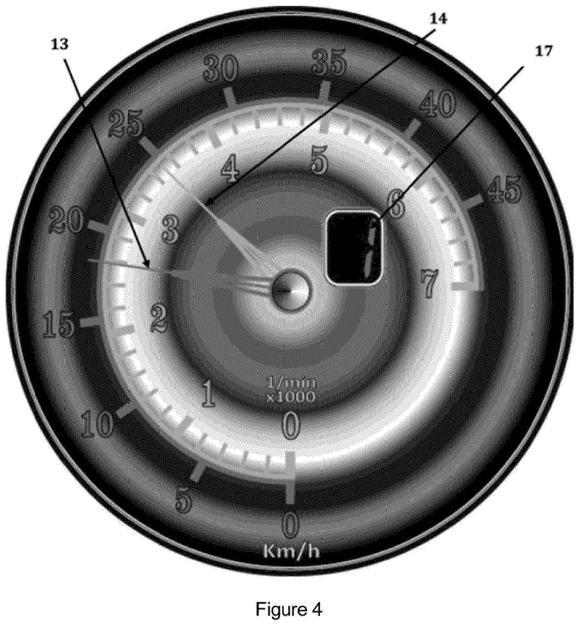

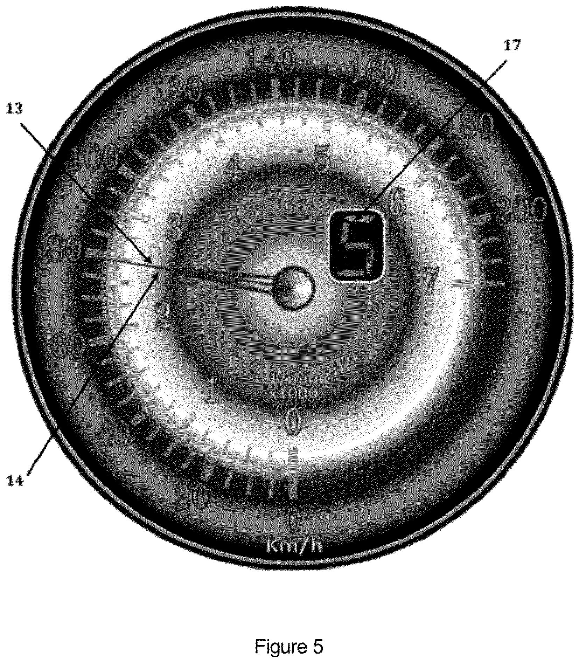

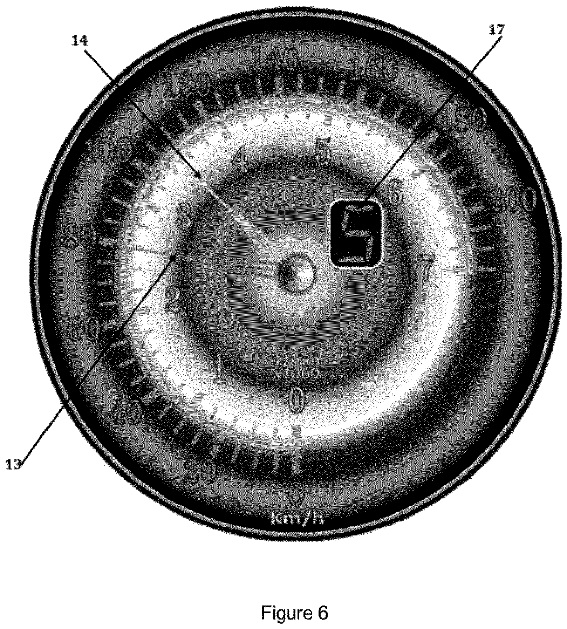

Now referring to figures 1 to 6, the display device of markers 15, 16 of a plurality of devices, cooperating as an assembly, such as a motor vehicle, a charger or consumer of a power source, etc., comprises at least a first indicator 13 to indicate a marker 15 of a first graduated scale 11 and a second indicator 14 to indicate a marker 16 of a second graduated scale 12, the graduated scales 11, 12 and indicators 13, 14 being shown on a display screen; such that during the normal operation of the device elements the first and second indicator 13, 14 are shown superimposed or aligned on the same display screen. That is to say, the two indicators 13, 14 indicate markers 15, 16 that are aligned during normal operation of the electromechanical device.

The display device further comprises a controller device in electrical communication with the first and second measuring device to continuously register the values of the first and second physical magnitudes originated in the first and second measuring device and a third referencing device being adapted to provide a reference value relative to the relationship between the physical magnitudes measured.

The controller device is in electrical communication with the first and second indicators to generate and transmit corresponding positioning signals to the first and second indicator, respectively, consistent or in accordance with the value referred to the relationship between the magnitudes measured, so that both first and second indicator 13, 14 indicate a marker 15 belonging to the first graduated scale 11 and a marker 16 also belonging to the second graduated scale 12 respectively.

The controller device is in electrical communication with a third indicator 17, which audio-visually shows, in real time, information related to the reference value relative to the relationship between physical magnitudes.

The controller device comprises a digital signal processor that carries out the transformation, in real time, consistent or in accordance with the reference value provided by the referencing device of the relationship between the physical magnitudes measured; of the graduated scales, divided in markers, at least one of them varying its size and, if necessary, its position based on the new existing mathematical relationship. In the case of a motor vehicle, the mathematical relationship corresponds to the speed or gear engaged in the gearbox.

The markers of the variable graduated scale or of the variable graduated scales 15, 16 also move in accordance and coinciding with their new relationship with the other scale, or other scales.

The values of physical magnitudes received from the first and second measuring device are transformed into positioning signals by the controller device, which transmits the positioning signals to the first and second indicators 13, and 14 so they indicate the corresponding markers 15, 16 belonging to the graduated scales 11, 12.

Now with regard to figures 1, 3 and 5, in case of their existing a normal operation of the elements of the electromechanical device, the first and the second indicator 13, 14 are shown superimposed or aligned on the same display screen.

The first and the second indicator 13, 14 position themselves, in real time, on the respective markers 15, 16 of the graduated scales displayed on the display screen. Therefore, the display device shows the user information of the current values of vehicle operation.

It should be noted that there is one indicator per graduated scale, which positions itself on a marker of the corresponding graduated scale to indicate the value of the physical magnitude relative to the current operation of the element of the electromechanical device.

Each marker 15 of the first graduated scale 11 is associated with a value of a first measurable physical magnitude relative to a first element of the vehicle. Similarly, the markers 16 of the second graduated scale 12 are associated to values of a second likewise measurable physical magnitude, relative to a second element of the vehicle.

The markers 15, 16 represent a succession of units between a minimum and maximum value of physical magnitudes representative of the operation of the electromechanical device elements. The graduated scales 11, 12 are related to each other by a known mathematical relationship. As a result, the display device includes graduated scales of various measurable physical magnitudes.

With each mathematical relationship change between the first and second measurable physical magnitude, at least one of the graduated scales 11, 12 varies its size and, if necessary, its position with respect to the other graduated scale based on the existing mathematical relationship. As a result, the markers 15, 16 of a graduated scale are also movable in accordance and coinciding with the current relationship between graduated scales 11, 12.

Therefore, the size and the relative position of the first scale 11 with respect to the second scale 12 is variable, as well as the position of their markers 15, 16, being a function of the current relationship between the first and second physical magnitude. During normal operation, the first graduated scale 11 and the second graduated scale 12 are represented on the display screen based on the mathematical relationship associated with the current operation, in real time of the electromechanical device, such that the first and second indicators 13, 14 are displayed indicating, if operation is normal, two markers, each of the markers respectively linked to a graduated scale.

However, if the operation of at least one element of the electromechanical device is other than the normal or expected operation, the first indicator and the second indicator will no longer be displayed aligned on the display screen, each indicator indicating a marker on the respective graduated scale. That is to say, the markers 15, 16 currently indicated by each indicator 13, 14 are not aligned when the operation of any element of the electromechanical device is other than the normal operation thereof. See figures 2, 4 and 6.

With each mathematical relationship change between the first and second measurable physical magnitude, at least one of the graduated scales varies its size and, if necessary, its position with respect to the other graduated scale based on the current mathematical relationship. As a result, the markers of the variable graduated scale also move in accordance and coinciding with the new relationship between scales.

The first and/or second indicator 13, 14 will adapt their operating relationship and if necessary their indicating position to the new representation of the graduated scales 11, 12 displayed on the display screen, to indicate the markers 15, 16 corresponding to the current operation of the electromechanical device; there being two situations, one of them is that the first and second indicators remain superimposed or aligned, to indicate aligned markers, which corresponds to a normal operation; see figures 1, 3 and 5; and the second possible situation is that the first and second indicators 13, 14 are displayed misaligned or not superimposed to indicate misaligned markers 15, 16 corresponding to operation other than the normal operation of the electromechanical device; see figures 2, 4 and 6.

Therefore, the first and second indicators 13, 14 are positioned on different markers 15, 16 without being aligned on the graduated scales displayed by the display device.

The indicators cease to be displayed aligned when the mathematical relationship between the measurable physical magnitudes is different from the relationship relative to the normal operation of the assembly.

The first physical magnitude corresponds to the output signal of a first measuring device adapted for measuring the first physical magnitude of the first element of the electromechanical device; for example, the first measuring device is configured to measure the instantaneous speed of the vehicle; the second physical magnitude corresponds to the output signal of a second measuring device adapted for measuring the second physical magnitude of the second element part of the electromechanical device such as, for example, the revolutions per minute of the engine in the same vehicle and the third value, corresponds to a reference about the mathematical relationship between the aforementioned magnitudes, such as for example the gear engaged.

As a result, the display device is adapted to notify the driver of the vehicle that the latter's operation is different from the normal or expected operation, when the first indicator and the second indicator are not superimposed and are positioned on likewise misaligned markers; thus, the display device notifies the existence of the abnormal operation of at least one vehicle element.

The first and the second indicators 13, 14 are a pointer, which point to a marker of the corresponding associated graduated scale, in turn, to a measurable magnitude.

The indicator may be a needle pointer mounted in a revolving or rotating manner, which moves the tip of the needle along the scale through a rotation or rotational movement or a linear movement, movable to the current value of the measurable physical magnitude.

Both markers 15, 16; and scales 11, 12, and indicators 13, 14 can be displayed in different colours and change colour to identify the current values of the physical magnitudes, as appropriate for an easier understanding of the information displayed by the display device.

With each mathematical relationship change between the first and second measurable physical magnitude, at least one of the graduated scales 11, 12 varies its size and, if necessary, its position with respect to the other graduated scale based on the existing mathematical relationship.

The first and/or second indicator 13, 14 will adapt their operation to the new relationship of the scales to indicate the new placement of the respective markers, moving if necessary, jointly, to indicate markers 15, 16 different from the markers prior to the change.

The indicators 13, 14 are no longer displayed aligned when the mathematical relationship relating to the normal operation of the electromechanical device that connects the measured physical magnitudes is no longer met.

When the mathematical relationship that relates two physical magnitudes varies, at least one of the graduated scales changes, varying its size and if necessary the position of the graduated scale displayed on the display screen, moving the markers 15, 16 so that with the new relationship the markers that meet the mathematical relationship that relates both magnitudes continue to be displayed aligned on both scales.

If the value of the separation between both the first and the second indicator 13, 14 exceeds a threshold difference, the user of the electromechanical device may be invited to take some action in the use or maintenance of the electromechanical device, or even to take the electromechanical device to a technical assistance service, to check the proper operation thereof in order to take the appropriate action, helping the user to make the best possible use.

As a result, the display device may inform the vehicle driver that vehicle operation is different from the expected normal or most effective operation, when the first indicator and the second indicator 13, 14 are positioned on misaligned markers 15, 16 of both scales; that is, the display device notifies of the existence of abnormal operation or operation different from that expected of parts of the vehicle linked together by physical magnitudes.

In short, the first and second graduated scale 11, 12 are displayed on the display screen with a certain degree of enlargement or reduction and/or offset based on the existing relationship, at a given time, between the first and second physical magnitude.

## Claims

1. A marker (15, 16) display device displays physical magnitudes measured by a first measuring device that measures values of a first physical magnitude and a second measuring device that measures values of a second physical , the display device comprises a controller device in electrical communication with at least the first measuring device, the second measuring device to continuously register the values of a first physical magnitude, the second physical magnitude, originating in the first measuring device and second measuring device; and a third referencing device adapted to provide a reference value relative to the mathematical relationship between the first and second physical magnitude, wherein the controller device is in electrical communication with a first indicator (13), a second indicator (14) to generate and transmit positioning signals to the first and a second indicator (13, 14), respectively, to indicate markers (15, 16) belonging to the first graduated scale (11) and the second graduated scale (12) such that the first and a second indicator (13, 14) are aligned during normal operation of the elements of the assembly; the controller device is configured to change the size and the relative position of a first scale (11) with respect to the second scale (12), wherein there is a mathematical relationship between the first physical magnitude and the second physical magnitude that can change during operation of the first and second measuring devices such that the size and the relative position of the first scale is changed as a function of the current relationship between the first and second physical magnitude.

2. Device according to claim 1; **characterised in that** the first and second indicator (13, 14) are configured to be aligned when indicating the markers (15, 16) during normal operation of the elements of the assembly.

3. Device according to claim 1; **characterised in that** the first and second indicator (13, 14) are configured to be misaligned when indicating the markers (15, 16) during an operation other than the normal or expected operation of the elements of the assembly.

4. Device according to claim 2 or 3, **characterised in that** the first graduated scale (11), the second graduated scale (12); the first indicator (13) and the second indicator (14) are displayed on a display screen.

5. Device according to claim 1; **characterised in that** the first physical magnitude and second physical magnitude are measurable independently one of the other.

6. Device according to any of the preceding claims, **characterised in that** the plurality of devices are assemblable within a motor vehicle and cooperate with the same motor vehicle.

7. Device according to claims 1 to 6, **characterised in that** the plurality of devices cooperate with a charger or a consumer of a power source.

## Patentansprüche

1. Eine Markierungsanzeigevorrichtung (15, 16) zeigt physikalische Größen an, die von einer ersten Messvorrichtung, die Werte einer ersten physikalischen Größe misst, und einer zweiten Messvorrichtung, die Werte einer zweiten physikalischen Größe misst, gemessen werden, wobei die Anzeigevorrichtung eine Steuerungsvorrichtung in elektrischer Kommunikation mit mindestens der ersten Messvorrichtung umfasst, wobei die zweite Messvorrichtung kontinuierlich die Werte einer ersten physikalischen Größe erfasst, wobei die zweite physikalische Größe von der ersten Messvorrichtung und der zweiten Messvorrichtung stammt; und eine dritte Referenzvorrichtung, die angepasst ist, um einen Referenzwert relativ zu der mathematischen Beziehung zwischen der ersten und zweiten physikalischen Größe bereitzustellen, wobei die Steuerungsvorrichtung in elektrischer Verbindung mit einer ersten
Anzeige (13), einer zweiten Anzeige (14) zum Erzeugen und Übertragen von Positionssignalen an die erste bzw. zweite Anzeige (13, 14), um Markierungen (15, 16) anzuzeigen, die zu der ersten Skala (11) und der zweiten Skala (12) gehören, so dass die erste und eine zweite Anzeige (13, 14) während des normalen Betriebs der Elemente der Baugruppe ausgerichtet sind; wobei die Steuereinrichtung konfiguriert ist, um die Größe und die relative Position einer ersten Skala (11) in Bezug auf die zweite Skala (12) zu ändern, wobei es eine mathematische
Beziehung zwischen der ersten physikalischen Größe und der zweiten physikalischen Größe, die sich während des Betriebs der ersten und zweiten Messvorrichtung ändern kann, sodass die Größe und die relative Position der ersten Skala geändert wird,
eine Funktion der aktuellen Beziehung zwischen der ersten und zweiten physikalischen Größe.

2. Vorrichtung nach Anspruch 1, **dadurch gekennzeichnet, dass** die erste und die zweite Anzeige (13, 14) so konfiguriert sind, dass sie ausgerichtet sind, wenn sie die Markierungen (15, 16) während des normalen Betriebs der Elemente der Anordnung anzeigen.

3. Vorrichtung nach Anspruch 1, **dadurch gekennzeichnet, dass** die erste und die zweite Anzeige (13, 14) so konfiguriert sind, dass sie ausgerichtet sind, wenn sie die Markierungen (15, 16) während eines Betriebs anzeigt,
der nicht dem normalen oder erwarteten Betrieb der Elemente der Baugruppe entspricht.

4. Vorrichtung nach Anspruch 2 oder 3, **dadurch gekennzeichnet, dass** die erste Skala (11), die zweite Skala (12), die erste Anzeige (13) und die zweite Anzeige (14) auf einem Bildschirm angezeigt werden.

5. Vorrichtung nach Anspruch 1, **dadurch gekennzeichnet, dass** die erste physikalische Größe und die zweite physikalische Größe unabhängig voneinander messbar sind.

6. Vorrichtung nach einem der vorhergehenden Ansprüche, **dadurch gekennzeichnet, dass** die Vielzahl von Vorrichtungen in einem Kraftfahrzeug montierbar sind und mit demselben Kraftfahrzeug zusammenwirken.

7. Vorrichtung nach den Ansprüchen 1 bis 6, **dadurch gekennzeichnet, dass** die Vielzahl von Vorrichtungen mit einem Ladegerät oder einem Verbraucher einer Stromquelle zusammenarbeiten.

## Revendications

1. Un dispositif de visualisation de repères (15, 16) affiche des grandeurs physiques mesurées par un premier dispositif de mesure qui mesure des valeurs d'une première grandeur physique et un second dispositif de mesure qui mesure des valeurs d'une seconde grandeur physique, le dispositif de visualisation comprenant un dispositif de commande en communication électrique avec au moins le premier dispositif de mesure, le second dispositif de mesure pour enregistrer en continu les valeurs d'une première grandeur physique, la seconde grandeur physique, provenant du premier dispositif de mesure et du second dispositif de mesure ; et un troisième dispositif de référencement adapté pour fournir une valeur de référence par rapport à la relation mathématique entre les première et seconde grandeurs physiques, le dispositif de commande étant en communication électrique avec un premier
indicateur (13), un second indicateur (14) pour générer et transmettre des signaux de positionnement aux premier et second indicateurs (13, 14), respectivement, pour indiquer des repères (15, 16) appartenant à la première échelle graduée (11) et à la seconde échelle graduée (12) de telle sorte que les premier et second indicateurs (13, 14) sont alignés pendant le fonctionnement normal des éléments de l'ensemble ; le dispositif de commande est configuré pour changer la taille et la position relative d'une première échelle (11) par rapport à la seconde échelle (12), dans lequel il y a une relation mathématique entre la première grandeur physique et la seconde grandeur physique qui peut changer pendant le fonctionnement des premiers et seconds dispositifs de mesure de telle sorte que la taille et la position relative de la première échelle sont modifiées comme une fonction de la relation actuelle entre le premier et seconde grandeurs physiques.

2. Dispositif selon la revendication 1, **caractérisé en ce que** les premier et second indicateurs (13, 14) sont configurés pour être alignés lors de l'indication des repères (15, 16) pendant le fonctionnement normal des éléments de l'ensemble.

3. Dispositif selon la revendication 1, **caractérisé en ce que** les premier et second indicateurs (13, 14) sont configurés pour être alignés lors de l'indication des repères (15, 16) pendant une opération autre que le
fonctionnement normal ou attendu des éléments de l'ensemble.

4. Dispositif selon la revendication 2 ou 3, **caractérisé en ce que** la première échelle graduée (11), la deuxième échelle graduée (12), le premier indicateur (13) et le second indicateur (14) sont affichés sur un écran de visualisation.

5. Dispositif selon la revendication 1, **caractérisé en ce que** la première grandeur physique et la seconde grandeur physique sont mesurables indépendamment l'une de l'autre.

6. Dispositif selon une des revendications précédentes, **caractérisé en ce que** la pluralité de dispositifs peut être assemblés à l'intérieur d'un véhicule à moteur et coopèrent avec ce même véhicule à moteur.

7. Dispositif selon les revendications 1 à 6, **caractérisé en ce que** la pluralité de dispositifs coopèrent avec un chargeur ou un consommateur d'une source d'alimentation.
